# EUROPÄISCHE PATENTSCHRIFT

(11) **EP 3 172 485 B1**
(45) Veröffentlichungstag und Bekanntmachung des Hinweises auf die Patenterteilung: **09.10.2019**
(21) Anmeldenummer: 15738615.2
(22) Anmeldetag: 13.07.2015
(51) Int. Cl.: F21S 41/176, F21S 41/135, F21V 23/04, F21V 9/30, F21S 41/16, F21Y 115/30, F21Y 115/10

(54) **BELEUCHTUNGSVORRICHTUNG MIT MINDESTENS EINEM LICHTSENSOR**
LIGHTING DEVICE HAVING AT LEAST ONE LIGHT SENSOR
DISPOSITIF D'ÉCLAIRAGE COMPORTANT AU MOINS UN CAPTEUR DE LUMIÈRE

(30) Priorität: 24.07.2014 DE 102014214601
(43) Veröffentlichungstag der Anmeldung: 31.05.2017
(73) Patentinhaber: OSRAM GmbH, 80807 München (DE)
(72) Erfinder: KHRUSHCHEV, Sergey, 93049 Regensburg (DE)
(86) Internationale Anmeldenummer: PCT/EP2015/065956
(87) Internationale Veröffentlichungsnummer: WO 2016/012293

(56) Entgegenhaltungen:
- US-A1- 2011 063 115
- US-A1- 2011 116 520
- US-A1- 2012 050 691

## Beschreibung

Beleuchtungsvorrichtung mit mindestens einem Lichtsensor Die Erfindung betrifft eine Beleuchtungsvorrichtung, aufweisend mindestens eine Lichtquelle zur Aussendung eines polarisierten Primärlichtstrahls, mindestens ein Leuchtstoffvolumen zum zumindest teilweisen Umwandeln von Primärlicht des Primärlichtstrahls in Sekundärlicht unterschiedlicher Wellenlänge, das in einem Pfad mindestens eines Primärlichtstrahls angeordnet ist und mindestens einen Lichtsensor, der zumindest in einem Teil eines originären Pfads des Primärlichtstrahls hinter dem Ort des Leuchtstoffvolumens angeordnet ist, wobei der Lichtsensor zumindestens für das Primärlicht empfindlich ist und polarisationsempfindlich ist, und wobei der Lichtsensor eine Fotodiode aufweist, die ein Primärlichtfilter und ein Polarisationsfilter aufweist. Die Erfindung ist insbesondere anwendbar auf Fahrzeugbeleuchtungsvorrichtungen, insbesondere Fahrzeugleuchten, z.B. Scheinwerfer, oder Module davon.

Es sind Beleuchtungsvorrichtungen der betreffenden Art bekannt, welche aber den Nachteil aufweisen, dass sie nicht oder mit einem nur sehr hohen Aufwand eine geringe Schädigung des Leuchtstoffvolumens feststellen können und somit zur Früherkennung einer Schädigung des Leuchtstoffvolumens nicht praktisch einsetzbar sind.

Die US 2011/0063115 A1 offenbart eine Beleuchtungsvorrichtung mit verbesserter Augensicherheit. Die Beleuchtungsvorrichtung umfasst ein Halbleiterlaserelement zur Emission von kohärentem Laserlicht, ein Konversionselement zur Konversion des Laserlichts in inkohärentes Licht und eine Sicherheitseinrichtung, die verhindert, das kohärentes Laserlicht nach außen gelangt.

Es ist die **Aufgabe** der vorliegenden Erfindung, die Nachteile des Standes der Technik zumindest teilweise zu überwinden und insbesondere eine einfach und preiswert umsetzbare Möglichkeit einer Feststellung einer Schädigung des Leuchtstoffvolumens, insbesondere einer Zerstörung und/oder Ablösung des Leuchtstoffvolumens, bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar.

Die Aufgabe wird gelöst durch eine Beleuchtungsvorrichtung, aufweisend mindestens eine Lichtquelle zur Aussendung eines polarisierten Primärlichtstrahls, mindestens ein Leuchtstoffvolumen zur zumindest teilweisen Umwandlung von Primärlicht des Primärlichtstrahls in Sekundärlicht unterschiedlicher Wellenlänge, das in einem Pfad mindestens eines Primärlichtstrahls angeordnet ist, und mindestens einen Lichtsensor oder Lichtdetektor aufweist, der zumindest in einem Teil eines originären Pfads des Primärlichtstrahls hinter dem Ort des Leuchtstoffvolumens angeordnet ist, wobei der Lichtsensor zumindest für das Primärlicht empfindlich ist und polarisationsempfindlich ist, und wobei der Lichtsensor eine Fotodiode aufweist, die ein Primärlichtfilter und ein Polarisationsfilter aufweist.

Dadurch wird der Vorteil erlangt, dass mit einfachen und preiswerten Komponenten eine Zerstörung und/oder Ablösung des Leuchtstoffvolumens besonders frühzeitig feststellbar ist.

Die Beleuchtungsvorrichtung mag insbesondere eine Lampe, ein Modul oder eine Leuchte sein.

Die mindestens eine Lichtquelle mag aus sich heraus bereits einen polarisierten Primärlichtstrahl erzeugen, z.B. falls die mindestens eine Lichtquelle ein Laser, insbesondere eine Laserdiode, ist. Sie mag aber auch einen unpolarisierten Lichtstrahl erzeugen, wobei sich in dem Pfad des Primärlichtstrahls vor dem Leuchtstoffvolumen ein Polarisator befindet, welcher dem hindurchlaufenden Primärlichtstrahl eine Polarisation bzw. Polarisationsrichtung aufprägt.

Die mindestens eine Lichtquelle mag insbesondere mindestens eine Halbleiterlichtquelle aufweisen. Insbesondere umfasst die mindestens eine Halbleiterlichtquelle mindestens eine Leuchtdiode. Bei Vorliegen mehrerer Leuchtdioden können diese in der gleichen Farbe oder in verschiedenen Farben leuchten. Eine Farbe kann monochrom (z.B. rot, grün, blau usw.) oder multichrom (z.B. weiß) sein. Auch kann das von der mindestens einen Leuchtdiode abgestrahlte Licht ein infrarotes Licht (IR-LED) oder ein ultraviolettes Licht (UV-LED) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar.

Die mindestens eine Halbleiterlichtquelle kann alternativ oder zusätzlich mindestens einen Diodenlaser aufweisen. Der Diodenlaser weist den Vorteil auf, dass das von ihm emittierte Primärlicht in vielen Fällen bereits transversal polarisiert ist.

Das Leuchtstoffvolumen mag einen oder mehrere Leuchtstoffe aufweisen. Ein Leuchtstoff ist dazu geeignet, einfallendes Primärlicht zumindest teilweise in Sekundärlicht unterschiedlicher Wellenlänge umzuwandeln oder zu konvertieren. Bei Vorliegen mehrerer Leuchtstoffe mögen diese Sekundärlicht von zueinander unterschiedlicher Wellenlänge erzeugen. Die Wellenlänge des Sekundärlichts mag länger sein (sog. "Down Conversion") oder kürzer sein (sog. "Up Conversion") als die Wellenlänge des Primärlichts. Beispielsweise mag blaues oder ultraviolettes Primärlicht mittels eines Leuchtstoffs in grünes, gelbes, orangefarbenes, rotes oder infrarotes Sekundärlicht umgewandelt werden. Bei einer nur teilweisen Wellenlängenumwandlung oder Wellenlängenkonversion wird von dem Leuchtstoffkörper eine Mischung aus Sekundärlicht und nicht umgewandelten Primärlicht abgestrahlt, die als Nutzlicht dienen kann. Beispielsweise mag weißes Nutzlicht aus einer Mischung aus blauem, nicht umgewandeltem Primärlicht und gelbem Sekundärlicht erzeugt werden. Jedoch ist auch eine Vollkonversion möglich, bei der das Nutzlicht entweder nicht mehr oder zu einem nur vernachlässigbaren Anteil in dem Nutzlicht vorhanden ist. Ein Umwandlungsgrad hängt beispielsweise von einer Dicke und/oder einer Leuchtstoffkonzentration des Leuchtstoffs ab. Bei Vorliegen mehrerer Leuchtstoffe können aus dem Primärlicht Sekundärlichtanteile unterschiedlicher spektraler Zusammensetzung erzeugt werden, z.B. gelbes und rotes Sekundärlicht. Das rote Sekundärlicht mag beispielsweise dazu verwendet werden, dem Nutzlicht einen wärmeren Farbton zu geben, z.B. sog. "warm-weiß". Bei Vorliegen mehrerer Leuchtstoffe mag mindestens ein Leuchtstoff dazu geeignet sein, Sekundärlicht nochmals wellenlängenumzuwandeln, z.B. grünes Sekundärlicht in rotes Sekundärlicht. Ein solches aus einem Sekundärlicht nochmals wellenlängenumgewandeltes Licht mag auch als "Tertiärlicht" bezeichnet werden.

Unter einem "originären Pfad" des Primärlichtstrahls mag insbesondere derjenige Lichtpfad verstanden werden, welche sich ohne Vorhandensein des Leuchtstoffvolumens ergeben würde. Der originäre Pfad mag eine oder mehrere Verzweigungen aufweisen. Der originäre Pfad mag beispielsweise einen Hauptpfad mit höchstem Lichtstrom oder höchster Intensität und einen oder mehrere Nebenpfade mit geringerem Lichtstrom aufweisen. Falls das Leuchtstoffvolumen vorhanden ist, wird der Primärlichtstrahl nicht im Wesentlichen auf seinem originären Pfad verlaufen, sondern durch das Leuchtstoffvolumen konvertiert oder gestreut werden, wodurch es zudem seine Polarisation verliert. Ist das Leuchtstoffvolumen hingegen teilweise oder vollständig nicht mehr vorhanden, wird der Primärlichtstrahl in entsprechendem Maße auf seinem originären Pfad verlaufen, insbesondere gebündelt oder konzentriert sowie weiterhin polarisiert.

Der Lichtsensor detektiert einen Teil des hinter dem Ort des (vorhandenen oder nicht mehr vorhandenen) Leuchtstoffvolumens vorhandenen Primärlichts und mag so z.B. feststellen, ob das Primärlicht mehr oder weniger polarisiert ist. Ein hoher Polarisationsgrad deutet auf ein zumindest teilweise entferntes Leuchtstoffvolumen hin.

Eine Detektionsempfindlichkeit des Lichtsensors für den Polarisationsgrads des Primärlichts kann dadurch erhöht werden, dass der Lichtsensor für das Sekundärlicht unempfindlich ist.

Es ist eine Ausgestaltung, dass der Teil des originären Pfads des Primärlichtstrahls, in dem der Lichtsensor angeordnet ist, ein Nebenlichtpfad ist. So kann ein besonders geringer Lichtverlust der Beleuchtungsvorrichtung in ihrem normalen Betrieb (bei unbeschädigtem, vorhandenem Leuchtvolumen) aufgrund des Vorhandenseins des Lichtsensors erreicht werden. Jedoch mag der Lichtsensor auch in einem Hauptlichtpfad angeordnet sein, so dass er ein besonders starkes Signal empfängt und/oder auch signifikant zur Abblockung von ungehindert austretendem Primärlicht dienen kann.

Es ist noch eine Ausgestaltung, dass der Teil des originären Pfads des Primärlichtstrahls, in dem der Lichtsensor angeordnet ist, ein Lichtpfad ist, der sich durch eine Reflexion an einem dem Ort des Leuchtstoffvolumens nachgeschalteten optischen Durchlichtelement ergibt. So lässt sich eine Abzweigung eines schwächeren, aber zur Polarisationsdetektion immer noch ausreichend starken Lichtstrahls ohne zusätzlich optische Elemente bewerkstelligen. Das Durchlichtelement ist zur problemlosen Anordnung des Lichtsensors und zur einfachen Trennung des reflektierten Strahls von dem einfallenden Strahl gegen eine Einstrahlrichtung des einfallenden Strahls geneigt. Ein Neigungswinkel mag z.B. mindestens 5° betragen. Der Neigungswinkel mag insbesondere 30° oder weniger, insbesondere 25° oder weniger, insbesondere 20° oder weniger betragen. Der Neigungswinkel mag insbesondere ca. 15° betragen.

Es ist auch noch eine Ausgestaltung, dass das Durchlichtelement ein lichtdurchlässiges Abdeckelement ist. So lässt sich eine Abzweigung des zu dem Lichtsensor führenden Lichtstrahls auf einfache Weise bewerkstelligen, ohne dass strahlformende optische Elemente aufwändig an diesen Zweck angepasst zu werden brauchen.

Es ist eine weitere Ausgestaltung, dass der originäre Primärlichtstrahl an einer Antireflexbeschichtung des Durchlichtelements in den Teil des originären Pfads des Primärlichtstrahls, in dem der Lichtsensor angeordnet ist, reflektierbar ist. Aufgrund der hohen Empfindlichkeit der polarisationsabhängigen Primärlichtdetektion lässt sich selbst noch von Reflexen an einer Antireflexbeschichtung ein sicher auswertbares Lichtsignal abzweigen. Dies ist besonders vorteilhaft, da viele Oberflächen von Durchlichtelementen mit einer Antireflexbeschichtung versehen sind und deren Fehlen eine Lichtausbeute der Beleuchtungsvorrichtung herabsetzen würde.

Es ist noch eine weitere Ausgestaltung, dass der mindestens eine Lichtsensor mindestens eine Fotodiode aufweist. Er mag alternativ oder zusätzlich z.B. als eine Photozelle, als ein CMOS-Sensor, als ein CCD-Sensor, als ein Fototransistor oder als ein Fotowiderstand ausgebildet sein.

Für eine besonders personensichere Detektion einer Ablösung des Leuchtstoffvolumens wird es bevorzugt, dass eine Abtastung mit einer Frequenz von mindestens 40 kHz erfolgt.

Der mindestens eine Lichtsensor mag intrinsisch nur für das Primärlicht empfindlich sein und/oder für eine bestimmte Polarisationsrichtung empfindlich sein. Es ist eine Ausgestaltung, die einen Einsatz besonders preiswerter Sensoren ermöglicht, dass mindestens einem Lichtsensor ein Primärlichtfilter und/oder ein Polarisationsfilter vorgeschaltet sind. Gemäß der Erfindung weist der Lichtsensor eine Fotodiode auf, die ein Primärlichtfilter und ein Polarisationsfilter aufweist.

Es ist ferner eine Ausgestaltung, dass die Beleuchtungsvorrichtung dazu eingerichtet ist, sich abzuschalten, wenn ein vorbestimmter Schwellwert eines Lichtstroms an mindestens einem Lichtsensor erreicht oder überschritten ist. Dadurch kann eine zu hohe Lichtabstrahlung der Beleuchtungsvorrichtung verhindert werden. Der vorbestimmte Schwellwert kann beispielsweise erreicht werden, wenn das Leuchtstoffvolumen zumindest teilweise nicht mehr vorhanden ist und/oder wenn bei vorhandenem Leuchtstoffvolumen eine Leistung der Lichtquelle(n) zu hoch ist.

Es ist zudem eine Ausgestaltung, dass die Beleuchtungsvorrichtung dazu eingerichtet ist, eine Aktion auszuführen, wenn ein vorbestimmter Wert einer Korrelation eines Lichtstroms an mindestens einem Lichtsensor mit einer Leistung mindestens einer zugehörigen Lichtquelle erreicht ist. Mittels dieser Korrelation, welche insbesondere ein Detektorsignal des Lichtsensors mit einer Leistung der Lichtquelle korreliert, z.B. deren Verhältnis betrachtet, lässt sich eine Änderung des Detektorsignals aufgrund einer Änderung eines Polarisationsgrads des auf den Lichtsensor einfallenden Primärlichts besonders empfindlich feststellen. Dadurch wiederum lässt sich eine Schädigung des Leuchtstoffvolumens besonders frühzeitig feststellen und daraufhin eine Aktion auslösen. Die Aktion mag beispielsweise eine Ausgabe eines Warnhinweises, z.B. an eine Steuereinheit eines Fahrzeugs, und/oder ein Dimmen oder Abschalten des Fahrzeugscheinwerfers umfassen.
Es ist auch noch eine Ausgestaltung, dass die Beleuchtungsvorrichtung eine Fahrzeug-Beleuchtungsvorrichtung, insbesondere für ein Luftfahrzeug, ein Wasserfahrzeug oder ein landgestütztes Fahrzeug wie einen Wagen oder ein Motorrad, ist. Beispielsweise mag die Beleuchtungsvorrichtung ein Fahrzeugscheinwerfer sein. Die Erfindung ist hierbei besonders vorteilhaft einsetzbar, weil Scheinwerfer in der Regel einen besonders hohen Lichtstrom abstrahlen und eine frühzeitige Detektion eines kommenden Versagens des Leuchtstoffvolumens besonders hohe Sicherheitsvorteile bringt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.
- Fig.1: zeigt in einer Schrägansicht Komponenten einer erfindungsgemäßen Beleuchtungsvorrichtung;
- Fig.2: zeigt die Komponenten aus Fig.1 in einer Seitenansicht;
- Fig.3: zeigt die Beleuchtungsvorrichtung analog zu Fig.1, wobei nun auch Lichtstrahlen bei einem noch vorhandenen Leuchtstoffvolumen eingezeichnet sind; und
- Fig.4: zeigt die Beleuchtungsvorrichtung analog zu Fig.1, wobei nun auch Lichtstrahlen bei einem nicht mehr vorhandenen Leuchtstoffvolumen eingezeichnet sind.

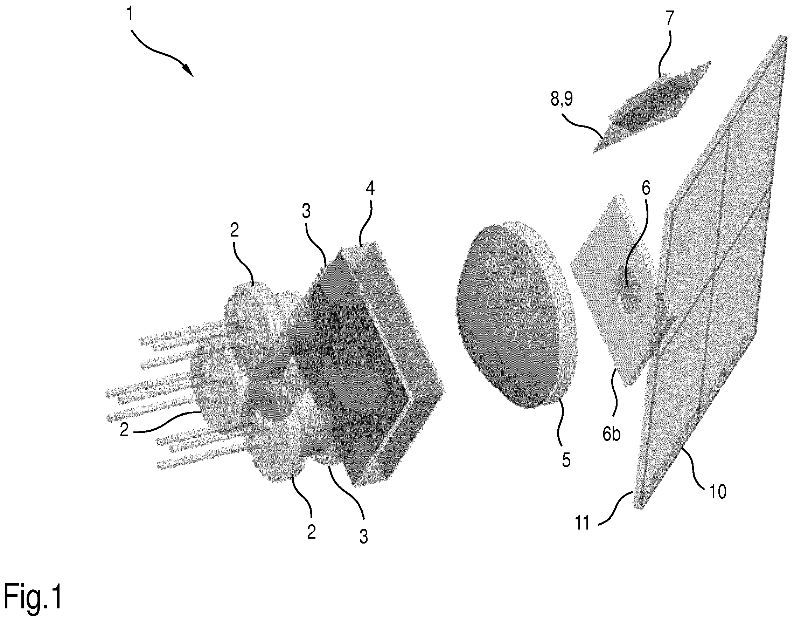

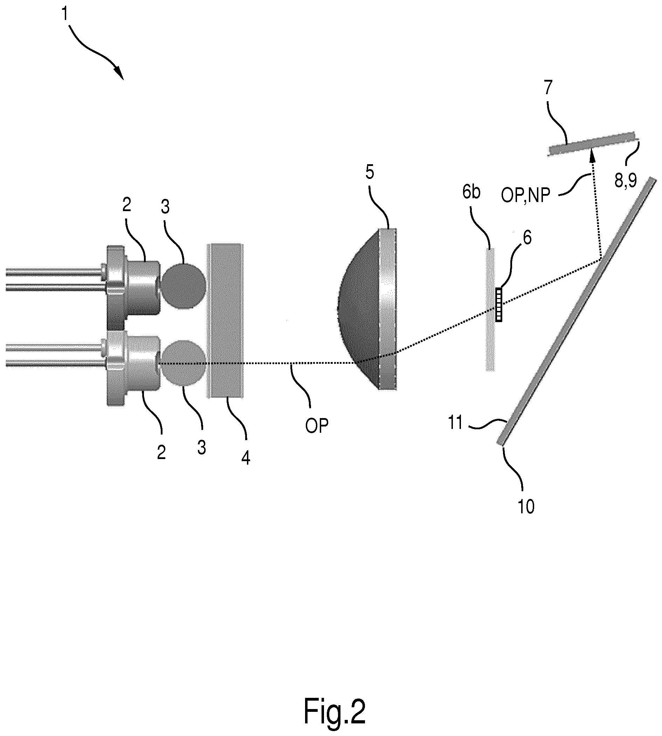

**Fig.1** zeigt in Schrägansicht ausgewählte Komponenten einer Beleuchtungsvorrichtung, die als ein Fahrzeugscheinwerfer 1 ausgebildet sein kann. **Fig.2** zeigt die Komponenten des Fahrzeugscheinwerfers 1 in einer Seitenansicht.

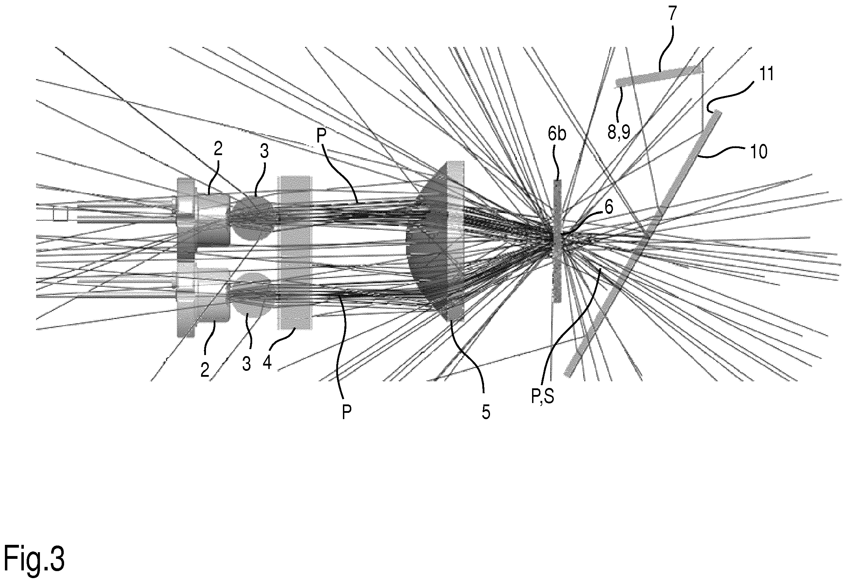

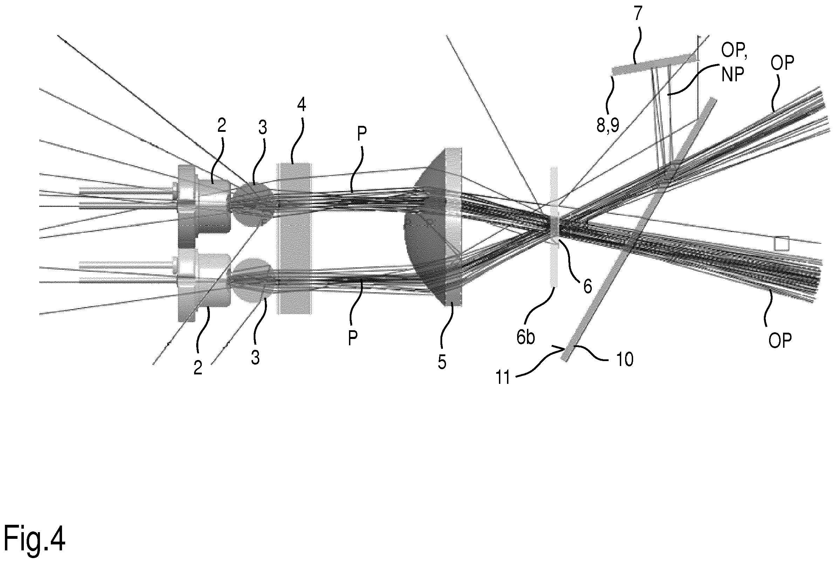

Der Fahrzeugscheinwerfer 1 weist mehrere, hier: drei Lichtquellen in Form von Laserdioden 2 auf. Die Laserdioden 2 strahlen jeweils ein Primärlichtbündel bzw. einen Primärlichtstrahl P aus blauem Primärlicht aus, wie auch in Fig.3 und Fig.4 gezeigt, beispielsweise mit einer Wellenlänge von 450 nm und einer Diodenleistung von 1,5 Watt. Die Polarisationsebenen der Laserdioden 1 sind so ausgerichtet, dass der Primärlichtstrahl P hochgradig transversal polarisiert ist. Die Laserdioden 2 sind hier in einer Ebene so angeordnet, dass ihre Positionen den Ecken eines gleichschenkligen Dreiecks entsprechen, da so eine hohe Anordnungsdichte erreicht wird.

Den Laserdioden 2 sind als Primäroptik zwei Zylinderlinsen 3 nachgeschaltet, wobei jede der Zylinderlinsen 3 mindestens einer der Laserdioden 2 als Kollimator dient. Die in Fig.2 obere Zylinderlinse 3 dient den beiden oberen Laserdioden 2 als Primäroptik, die untere Zylinderlinse 3 der unteren Laserdiode 2 als Primäroptik. So kann eine erste Strahlformung des Primärlichtstrahls P mit besonders wenigen, einfach geformten Durchlichtoptiken erreicht werden.

Den Zylinderlinsen 3 ist ein gemeinsames Mikrolinsenfeld ("Micro Lens Array"; MLA) 4 nachgeschaltet, um die drei Primärlichtstrahlen P hinter den Zylinderlinsen 3 weiter zu formen, z.B. auch umzulenken.

Die drei Primärlichtstrahlen P laufen von dem Mikrolinsenfeld 4 weiter in eine Fokussierungslinse 5, mittels der sie auf ein Leuchtstoffvolumen 6 fokussiert werden. Das Leuchtstoffvolumen 6 mag einen oder mehrere Leuchtstoffe aufweisen. Das Leuchtstoffvolumen 6 ist hier als eine plättchenförmige Schicht mit pulverförmigem Leuchtstoff auf einem transparenten Substrat 6b, z.B. aus Glas oder Saphir, ausgebildet. Jedoch kann das Leuchtstoffvolumen 6 z.B. auch ein keramischer Leuchtstoff sein und beispielsweise als Keramikplättchen vorliegen.

Durch mindestens einen in dem Leuchtstoffvolumen 6 vorhandenen Leuchtstoff wird das blaue Licht der Primärlichtstrahlen P ganz ("Vollkonversion") oder teilweise ("Teilkonversion") in Sekundärlicht S umgewandelt, hier z.B. teilweise in gelbes Sekundärlicht S. Auf der den Laserdioden 2 abgewandten Seite wird von dem Leuchtstoffvolumen 6 daher ein blau-gelbes oder weißes Mischlicht P, S abgestrahlt, dessen Anteil an nicht umgewandelten blauem Licht zufällig polarisiert ist und also keine bevorzugte transversale Polarisationsrichtung mehr aufweist. Dies liegt daran, dass das nicht umgewandelte blaue Licht in dem Leuchtstoffvolumen 6 gestreut wird und die Streuung also die Vorzugsrichtung der Polarisation zerstört.

Das Mischlicht P, S wird vergleichsweise breit strahlend durch eine lichtdurchlässige Abdeckscheibe 10 herausgestrahlt. Es mag dann z.B. durch eine Abbildungsoptik (o. Abb.) in ein Fernfeld vor dem Fahrzeugscheinwerfer 1 projiziert werden.

Der Fahrzeugscheinwerfer 1 weist ferner einen Lichtsensor in Form einer Fotodiode 7 auf, der ein für das blaue Licht durchlässiges, aber für das gelbe Sekundärlicht nicht oder nur gering durchlässiges Filter ("Blaufilter" 8) vor seinem lichtempfindlichen Detektorelement (o. Abb.) angeordnet ist. Die Fotodiode kann beispielsweise eine effektive Sensorfläche von 1 mm² oder weniger, z.B. von 0,36 mm², aufweisen. Die Fotodiode 7 weist ferner ein vor seinem lichtempfindlichen Detektorelement angeordnetes Polarisationsfilter 9 auf. Die Fotodiode 7 bzw. 7 bis 9 ist also für das blaue Licht eines Primärlichtstrahls P in einer bestimmten Polarisationsrichtung besonders empfindlich. Er detektiert jedoch das Sekundärlicht S nicht, ist also dafür unempfindlich.

Der Lichtsensor 7 bis 9 ist in einem Teil eines ("originären") Pfads OP des Primärlichtstrahls P hinter dem Ort des Leuchtstoffvolumens 6 angeordnet, der sich ergibt, wenn das Leuchtstoffvolumen 6 bzw. der Leuchtstoff nicht vorhanden ist oder wäre. Dies mag beispielsweise der Fall sein, wenn sich das Leuchtstoffvolumen 6 ganz oder teilweise gelöst hat und/oder zerstört worden ist.

Der Lichtsensor 7 bis 9 mag in einem Hauptzweig oder Hauptlichtpfad oder in einem Nebenzweig oder Nebenlichtpfad NP des originären Pfads OP angeordnet sein. Ein Hauptlichtpfad zeichnet sich dadurch aus, dass er bei einer Lichtaufspaltung einen größeren Anteil eines Lichtstroms weiterführt oder aufweist, während ein Nebenlichtpfad NP einen geringeren Anteil weiterführt oder aufweist. In diesem Ausführungsbeispiel ist der Lichtsensor 7 bis 9 in einem Nebenlichtpfad NP des originären Pfads OP angeordnet, nämlich in einem Nebenlichtpfad NP, der sich ergibt, wenn nicht durch das Leuchtstoffvolumen 6 beeinflusstes (z.B. gestreutes) Primärlicht an der Abdeckscheibe 10 reflektiert wird. Dies ist auch dann der Fall, wenn die Abdeckscheibe 10 am Ort der Reflexion eine Antireflexbeschichtung 11 aufweist, insbesondere an einer den Laserdioden 2 zugewandten Seite. Trotz der Antireflexbeschichtung 11 werden 0,3 bis 0,5% des schräg auf die Abdeckscheibe 10 auftreffenden Lichts reflektiert. Die Abdeckscheibe 10 ist schräg zu dem originären Pfad OP ausgerichtet, z.B. in einem Winkel von ca. 15°.

Wenn also, wie in **Fig.3** gezeigt, das Leuchtstoffvolumen 6 vorhanden ist, wird bei aktivierten Laserdioden 2 an dessen den Laserdioden 2 abgewandten Seite das Mischlicht P, S breit abgestrahlt. Der Anteil des Mischlichts P, S, welcher von der Abdeckscheibe 10 in den Fotodetektor 7 bis 9 reflektiert wird, ist gering. Durch das Blaufilter 8 wird der Anteil des gelben Sekundärlichts S herausgefiltert, und dann wird aus dem übrig gebliebenen, durchgelassenen Anteil des blauen Primärlichts ein "falsch" polarisierter Anteil durch das Polarisationsfilter 9 herausgefiltert. Der Anteil des durchgelassenen Primärlichts bei ungerichteter Polarisation ist gering, insbesondere vernachlässigbar gering. Insbesondere mag durch dieses Primärlichts bei ungerichteter Polarisation ein Sensorsignal im Bereich des Grundrauschens erzeugt werden.

Ist das Leuchtstoffvolumen 6 jedoch, wie in **Fig.4** gezeigt, zumindest teilweise nicht mehr vorhanden, kann zumindest ein Teil des einfallenden Primärlichtstrahls P ohne Wechselwirkung durch den (vorgesehenen) Ort des Leuchtstoffvolumens 6 hindurchlaufen, also ohne umgewandelt oder gestreut zu werden. Dadurch verläuft der Primärlichtstrahl P nun hinter dem Ort des Leuchtstoffvolumens 6 entlang seines "originären" Pfads und wird am Ort des Leuchtstoffvolumens 6 nicht breit gestreut. Er trifft nun zum größten Teil unter einem solchen Winkel auf die Abdeckscheibe 10, dass der an der Abdeckscheibe 10 reflektierte Anteil praktisch vollständig auf die Fotodiode 7 einstrahlt. Das Blaufilter 8 lässt das blaue Primärlicht praktisch vollständig durch. Das Polarisationsfilter 9 ist so angeordnet bzw. eingestellt, dass das hochgradig polarisierte (weil nicht gestreute) Primärlicht ebenfalls praktisch vollständig durchlässt.

Somit wird bei Abwesenheit des Leuchtstoffvolumens 6 ein erheblich höherer Lichtstrom festgestellt als bei Anwesenheit des Leuchtstoffvolumens 6. Aufgrund der von dem Polarisationsverhalten abhängigen Detektionsempfindlichkeit der Fotodiode 7 ist ein messbar höherer Lichtstrom auch dann detektierbar, wenn das Leuchtstoffvolumen 6 nur teilweise nicht mehr vorhanden oder beschädigt ist. Die Detektionsempfindlichkeit ist signifikant besser als ohne Betrachtung der Polarisation bzw. ohne Polarisationsfilterung. Somit lassen sich auch kleine fehlende Leuchtstoffvolumina (Löcher) mit einem Durchmesser im Millimeter- und Submillimeterbereich sicher detektieren.

Der Fahrzeugscheinwerfer 1 ist insbesondere dazu eingerichtet, sich selbsttätig abzuschalten, wenn ein vorbestimmter Schwellwert eines Lichtstroms an dem Fotodetektor 7 erreicht oder überschritten ist. Dadurch kann eine zu hohe Lichtabstrahlung des Fahrzeugscheinwerfers 1 verhindert werden. Der vorbestimmte Schwellwert kann beispielsweise erreicht werden, wenn das Leuchtstoffvolumen 6 zumindest teilweise nicht mehr vorhanden ist und/oder wenn bei vorhandenem Leuchtstoffvolumen 6 eine Leistung der Laserdiode(n) 2 zu hoch ist. Der Fahrzeugscheinwerfer 1 mag dazu eine Steuereinrichtung aufweisen. Alternativ mag der Fahrzeugscheinwerfer 1 sich nicht selbsttätig abschalten, sondern nur ein Signal über das Erreichen oder Überschreiten des Schwellwerts an das Fahrzeug ausgeben, welches dann den Fahrzeugscheinwerfer 1 abschaltet.

Der Fahrzeugscheinwerfer 1 ist auch dazu eingerichtet, eine Aktion auszuführen, wenn ein vorbestimmter Wert einer Korrelation eines Lichtstroms an der Fotodiode 7 mit einer Leistung mindestens einer zugehörigen Laserdiode 2 erreicht ist. Mittels dieser Korrelation, welche insbesondere ein Detektorsignal der Fotodiode 7 mit einer Leistung der Laserdiode 2 korreliert, z.B. deren Verhältnis betrachtet, lässt sich eine Änderung des Detektorsignals aufgrund einer Änderung eines Polarisationsgrads des auf die Fotodiode 7 bis 9 einfallenden blauen Primärlichts besonders empfindlich feststellen. Dadurch wiederum lässt sich eine Schädigung des Leuchtstoffvolumens 6 besonders frühzeitig feststellen und daraufhin eine Aktion auslösen. Die Aktion mag beispielsweise eine Ausgabe eines Warnhinweises, z.B. an eine Steuereinheit eines Fahrzeugs, und/oder ein Dimmen oder Abschalten des Fahrzeugscheinwerfers 1 umfassen.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: Fahrzeugscheinwerfer
- 2: Laserdiode
- 3: Zylinderlinse
- 4: Mikrolinsenfeld
- 5: Fokussierungslinse
- 6: Leuchtstoffvolumen
- 6b: Substrat
- 7: Fotodiode
- 8: Blaufilter
- 9: Polarisationsfilter
- 10: Lichtdurchlässige Abdeckscheibe
- 11: Antireflexbeschichtung
- NP: Nebenlichtpfad
- OP: Originärer Pfad des Primärlichtstrahls
- P: Primärlichtstrahl
- S: Sekundärlicht

## Patentansprüche

1. Beleuchtungsvorrichtung (1), aufweisend
- mindestens eine Lichtquelle (2) zur Aussendung eines polarisierten Primärlichtstrahls (P),
- mindestens ein Leuchtstoffvolumen (6) zum zumindest teilweise Umwandeln von Primärlicht des Primärlichtstrahls (P) in Sekundärlicht (S) unterschiedlicher Wellenlänge, das in einem Pfad mindestens eines Primärlichtstrahls (P) angeordnet ist und
- mindestens einen Lichtsensor (7-9), der zumindest in einem Teil eines originären Pfads des Primärlichtstrahls (P) hinter dem Ort des Leuchtstoffvolumens angeordnet ist,
wobei
- der Lichtsensor (7-9) zumindest für das Primärlicht empfindlich ist und polarisationsempfindlich ist,
**dadurch gekennzeichnet, dass**
der Lichtsensor (7-9) eine Fotodiode (7) aufweist, die ein Primärlichtfilter (8) und ein Polarisationsfilter (9) aufweist.

2. Beleuchtungsvorrichtung (1) nach Anspruch 1, wobei der Lichtsensor (7-9) für das Sekundärlicht (S) unempfindlich ist.

3. Beleuchtungsvorrichtung (1) nach einem der vorhergehenden Ansprüche, wobei der Teil des originären Pfads (OP) des Primärlichtstrahls (P), in dem der Lichtsensor (7-9) angeordnet ist, ein Nebenlichtpfad (NP) ist.

4. Beleuchtungsvorrichtung (1) nach einem der vorhergehenden Ansprüche, wobei der Teil des originären Pfads (OP) des Primärlichtstrahls (P), in dem der Lichtsensor (7-9) angeordnet ist, ein Lichtpfad (NP) ist, der sich durch eine Reflexion an einem dem Ort des Leuchtstoffvolumens (6) nachgeschalteten optischen Durchlichtelement (10) ergibt.

5. Beleuchtungsvorrichtung (1) nach Anspruch 4, wobei das Durchlichtelement (10) ein lichtdurchlässiges Abdeckelement ist.

6. Beleuchtungsvorrichtung (1) nach einem der Ansprüche 4 oder 5, wobei der originäre Primärlichtstrahl an einer Antireflexbeschichtung (11) des Durchlichtelements (10) in den Teil (NP) des originären Pfads (OP) des Primärlichtstrahls, in dem der Lichtsensor (7-9) angeordnet ist, reflektierbar ist.

7. Beleuchtungsvorrichtung (1) nach einem der vorhergehenden Ansprüche, wobei die Beleuchtungsvorrichtung (1) dazu eingerichtet ist, sich abzuschalten, wenn ein vorbestimmter Schwellwert eines Lichtstroms an mindestens einem Lichtsensor (7-9) erreicht oder überschritten ist.

8. Beleuchtungsvorrichtung (1) nach einem der vorhergehenden Ansprüche, wobei die Beleuchtungsvorrichtung (1) dazu eingerichtet ist, eine Aktion auszuführen, wenn ein vorbestimmter Wert einer Korrelation eines Lichtstroms an mindestens einem Lichtsensor (7-9) mit einer Leistung mindestens einer zugehörigen Lichtquelle (2) erreicht ist.

9. Beleuchtungsvorrichtung (1) nach einem der vorhergehenden Ansprüche, wobei die Beleuchtungsvorrichtung (1) ein Fahrzeugscheinwerfer ist.

## Claims

1. Lighting device (1), comprising
- at least one light source (2) for emitting a polarized primary light beam (P),
- at least one phosphor volume (6) for at least partly converting primary light of the primary light beam (P) into secondary light (S) having a different wavelength, which is arranged in a path of at least one primary light beam (P), and
- at least one light sensor (7-9) arranged at least in a part of an original path of the primary light beam (P) downstream of the location of the phosphor volume,
wherein
- the light sensor (7-9) is sensitive at least to the primary light and is polarization-sensitive,
**characterized in that**
the light sensor (7-9) comprises a photodiode (7) comprising a primary light filter (8) and a polarization filter (9).

2. Lighting device (1) according to Claim 1, wherein the light sensor (7-9) is insensitive to the secondary light (S) .

3. Lighting device (1) according to either of the preceding claims, wherein the part of the original path (OP) of the primary light beam (P) in which the light sensor (7-9) is arranged is an auxiliary light path (NP).

4. Lighting device (1) according to any of the preceding claims, wherein the part of the original path (OP) of the primary light beam (P) in which the light sensor (7-9) is arranged is a light path (NP) which arises as a result of a reflection at an optical transmitted-light element (10) disposed downstream of the location of the phosphor volume (6) .

5. Lighting device (1) according to Claim 4, wherein the transmitted-light element (10) is a light-transmissive covering element.

6. Lighting device (1) according to either of claims 4 and 5, wherein the original primary light beam is reflectable at an antireflection coating (11) of the transmitted-light element (10) into the part (NP) of the original path (OP) of the primary light beam in which the light sensor (7-9) is arranged.

7. Lighting device (1) according to any of the preceding claims, wherein the lighting device (1) is configured to turn off if a predetermined threshold value of a luminous flux at at least one light sensor (7-9) is reached or exceeded.

8. Lighting device (1) according to any of the preceding claims, wherein the lighting device (1) is configured to perform an action if a predetermined value of a correlation of a luminous flux at at least one light sensor (7-9) with a power of at least one associated light source (2) is reached.

9. Lighting device (1) according to any of the preceding claims, wherein the lighting device (1) is a vehicle headlight.

## Revendications

1. Dispositif d'éclairage (1) comportant :
- au moins une source de lumière (2) pour émettre un faisceau de lumière primaire polarisé (P),
- au moins un volume de substance luminescente (6) pour la conversion au moins partielle de lumière primaire du faisceau de lumière primaire (P) en lumière secondaire (S) de longueur d'onde différente, lequel est agencé sur un chemin d'au moins un faisceau de lumière primaire (P) et
- au moins un capteur de lumière (7-9) qui est agencé au moins dans une partie d'un chemin d'origine du faisceau de lumière primaire (P) en aval de l'emplacement du volume de substance luminescente,
- le capteur de lumière (7-9) étant sensible au moins à la lumière primaire et sensible à la polarisation,
**caractérisé en ce que**
le capteur de lumière (7-9) comporte une photodiode (7) qui comporte un filtre de lumière primaire (8) et un filtre de polarisation (9).

2. Dispositif d'éclairage (1) selon la revendication 1, le capteur de lumière (7-9) étant insensible à la lumière secondaire (S).

3. Dispositif d'éclairage (1) selon l'une des revendications précédentes, la partie du chemin d'origine (OP) du faisceau de lumière primaire (P) dans laquelle est agencé le capteur de lumière (7-9) étant un chemin de lumière parasite (NP).

4. Dispositif d'éclairage (1) selon l'une des revendications précédentes, la partie du chemin d'origine (OP) du faisceau de lumière primaire (P) dans laquelle est agencé le capteur de lumière (7-9) étant un chemin de lumière (NP) qui résulte d'une réflexion au niveau d'un élément transmissif optique (10) monté en aval de l'emplacement du volume de substance luminescente (6).

5. Dispositif d'éclairage (1) selon la revendication 4, l'élément transmissif (10) étant un élément de recouvrement translucide.

6. Dispositif d'éclairage (1) selon l'une des revendications 4 ou 5, le faisceau de lumière primaire d'origine pouvant être réfléchi au niveau d'un revêtement antireflet (11) de l'élément transmissif (10) dans la partie (NP) du chemin d'origine (OP) du faisceau de lumière primaire dans laquelle est agencé le capteur de lumière (7-9).

7. Dispositif d'éclairage (1) selon l'une des revendications précédentes, le dispositif d'éclairage (1) étant configuré pour se couper lorsqu'une valeur seuil prédéterminée d'un flux de lumière est atteinte ou dépassée au niveau d'au moins un capteur de lumière (7-9) .

8. Dispositif d'éclairage (1) selon l'une des revendications précédentes, le dispositif d'éclairage (1) étant configuré pour exécuter une action lorsqu'est atteinte une valeur prédéterminée d'une corrélation d'un flux de lumière au niveau d'au moins un capteur de lumière (7-9) avec une puissance d'au moins une source de lumière associée (2).

9. Dispositif d'éclairage (1) selon l'une des revendications précédentes, le dispositif d'éclairage (1) étant un phare de véhicule.
